# EUROPÄISCHE PATENTSCHRIFT

(11) **EP 3 554 881 B1**
(45) Veröffentlichungstag und Bekanntmachung des Hinweises auf die Patenterteilung: **03.08.2022**
(21) Anmeldenummer: 17823073.6
(22) Anmeldetag: 14.12.2017
(51) Int. Cl.: B60K 35/00, B60K 37/00, B60K 37/06, B60R 11/02, B60R 25/24, B60R 11/00, B62J 99/00

(54) **ANZEIGEVORRICHTUNG UND AUTHENTIFIZIERUNGSVORRICHTUNG FÜR EINEN MOTORROLLER SOWIE VERFAHREN ZUM STEUERN EINER ANZEIGEVORRICHTUNG UND COMPUTER-LESBARES SPEICHERMEDIUM**
DISPLAY DEVICE AND AUTHENTICATION DEVICE FOR A MOTOR SCOOTER, AND METHOD FOR CONTROLLING A DISPLAY DEVICE AND COMPUTER-READABLE STORAGE MEDIUM
DISPOSITIF D'AFFICHAGE ET DISPOSITIF D'AUTHENTIFICATION POUR SCOOTER ET PROCÉDÉ DE COMMANDE D'UN DISPOSITIF D'AFFICHAGE ET SUPPORT DE MÉMORISATION LISIBLE PAR ORDINATEUR

(30) Priorität: 14.12.2016 DE 102016124407
(43) Veröffentlichungstag der Anmeldung: 23.10.2019
(73) Patentinhaber: UJET S.A., 3364 Leudelange (LU)
(72) Erfinder: DAVID, Patrick, 89134 Blaustein (DE); GREHL, Mariana, 89195 Staig (DE)
(74) Vertreter: Würmser, Julian
(86) Internationale Anmeldenummer: PCT/EP2017/082839
(87) Internationale Veröffentlichungsnummer: WO 2018/109094

(56) Entgegenhaltungen:
- EP-A1- 2 143 598
- DE-A1-102015 005 365
- FR-A1- 2 809 681
- US-A1- 2003 128 103

## Beschreibung

Die Erfindung betrifft eine Anzeigevorrichtung nach Anspruch 1 sowie eine Authentifizierungsvorrichtung nach Anspruch 5.

Mit elektrischen Antrieben ausgestattete Motorroller sind beispielsweise aus der EP 1 857 314 A2 bekannt. Entsprechende elektrische Motorroller oder motorisierte Zweiräder haben üblicherweise eine Karosserie und zwei Räder, wobei eines der Räder über einen elektrischen Antrieb angetrieben wird.

Ferner haben solche Motorroller üblicherweise eine Lenkerbaugruppe, umfassend einen Lenker sowie eine Anzeigevorrichtung zur Darstellung von Geschwindigkeitsinformationen oder dem Ladezustand einer Batterie. Zusätzlich ist an der Lenkerbaugruppe oftmals ein Zündschloss vorgesehen, welches als Diebstahlsicherung des Motorrollers dient.

Das Vorsehen eines physischen Zündschlosses ist insbesondere dann nachteilig, wenn mehrere Fahrer sich ein Fahrzeug teilen. Zum Beispiel ist es beim sog. "Car-Sharing" nicht möglich, jedem potentiellen Fahrer einen Schlüssel zu überlassen.

Die Anzeigevorrichtungen sind üblicherweise mit einem Display ausgestattet, welches durch eine Glasschicht geschützt wird. Folglich können an dem Display Reflektionen auftreten, die die Lesbarkeit des Displays erschweren. Darüber hinaus können die Reflektionen zu einer Blendung des Fahrers führen, was die Verkehrssicherheit stark beeinträchtigt und zu einem unangenehmen Fahrgefühl führen kann.

Auch ist das Display besonders stark äußeren Umweltfaktoren, wie Hagel, Schnee oder Regen, ausgesetzt und ein Ziel von Vandalismus, wenn das Fahrzeug abgestellt ist. Ein Schaden am Display, z.B. eine zerbrochene Glasscheibe, kann jedoch dazu führen, dass das gesamte Fahrzeug nicht mehr funktionsfähig ist, da z.B. Geschwindigkeitsinformationen nicht mehr abgelesen werden können. Der Schutz des Displays ist daher von besonderer Bedeutung für das Fahrzeug.

US 2003/128103 A1 beschreibt eine Anzeigevorrichtung mit einem gegenüber einer Basis elektromotorisch verschwenkbaren Display für ein Auto, das auch an einem Motorrad eingesetzt werden kann. EP 2 143 598 A1 beschreibt ein Diebstahlschutzsystem für elektrische Fahrzeuge mit einem elektronischen Schlüssel.

Ausgehend von diesem Stand der Technik ist es Aufgabe der vorliegenden Erfindung, die vorstehend beschriebenen Nachteile zu adressieren. Insbesondere soll eine Anzeigevorrichtung bereitgestellt werden, die dazu beiträgt, die Verkehrssicherheit zu erhöhen. Darüber hinaus ist es Aufgabe der vorliegenden Erfindung, eine Authentifizierungsvorrichtung anzugeben, die eine sichere und schnelle Freigabe eines Fahrzeugs zum Fahren bietet.

Erfindungsgemäß wird die Aufgabe durch die Gegenstände der Patentansprüche 1 und 5 gelöst.

Vorteilhafte und zweckmäßige Ausgestaltungen der erfindungsgemäßen Anzeigevorrichtung sowie der erfindungsgemäßen Authentifizierungsvorrichtung sind in den Unteransprüchen angegeben.

Insbesondere wird die Aufgabe durch eine Anzeigevorrichtung mit einer Basis gelöst. Dabei kann es sich um eine Anzeigevorrichtung für ein Fahrzeug, wie z.B. einen Elektroroller, ein Motorrad oder ein elektrisch angetriebenes Quad handeln. Die Anzeigevorrichtung kann auch für andere, nichtelektrisch angetriebene Fahrzeuge, wie z.B. ein Fahrrad oder ein Boot, vorgesehen sein.

Die Anzeigevorrichtung weist ein Display auf, wobei das Display über ein Displaygelenk verschwenkbar, insbesondere drehbeweglich, an der Basis gelagert ist. Die Anzeigevorrichtung weist einen Aktuator auf, der in Wirkverbindung mit dem Display und/oder dem Displaygelenk steht und dazu ausgebildet ist, das Display mittels mindestens eines Displaygelenks von einer ersten Stellung in eine zweite Stellung zu verschwenken. Die Anzeigevorrichtung weist darüber hinaus eine Steuereinrichtung zum Ansteuern des Aktuators auf und eine Kommunikationseinrichtung zum Empfangen einer Eingabe auf. Die Steuereinrichtung ist dazu ausgebildet, in Reaktion auf mindestens eine Eingabe, den Aktuator derart anzusteuern, dass das Display von der ersten Stellung in die zweite Stellung verschwenkt wird.

Die Anzeigevorrichtung ermöglicht also das Verschwenken des Displays zwischen verschiedenen Stellungen. Insbesondere wird die Kommandierung der Steuereinrichtung in Abhängigkeit von dem Empfang der Eingabe gesteuert. Es ist somit auf einfache Weise möglich, das Display zu verstellen. Zum Schutz des Displays kann dieses zum Beispiel beim Verlassen des Fahrzeugs in eine geschlossene Stellung verschwenkt werden, sodass empfindliche Komponenten geschützt sind. Ein weiterer Vorteil ist, dass das Display als Signalgeber verwendet werden kann, sodass z.B. einem Fahrer mitgeteilt werden kann, ob sich das Fahrzeug in einem betriebsbereiten Zustand befindet.

Für die einzelnen Komponenten der Anzeigevorrichtung sind verschiedene Ausgestaltungen denkbar. Bei dem Display kann es sich beispielsweise um ein TFT- oder ein LED- bzw. OLED-Display handeln. Das Display kann matt oder glänzend ausgebildet sein, wobei im Falle eines glänzenden Displays, eine Glasplatte als Schutz auf der dem Fahrer zugewandten Seite des Displays, angeordnet sein kann. Der Aktuator kann als Elektromotor, insbesondere als ein bürstenloser Gleichstrommotor, ausgebildet sein. Der Aktuator kann derart angeordnet sein, dass eine Drehwelle in axialer Richtung derart in das Displaygelenk eingreift, dass eine Drehung der Welle ein Verschwenken des Displays bewirkt.

Bei der Steuereinrichtung kann es sich um einen Prozessor mit einem Speicher, eine speicherprogrammierbare Steuereinheit (SPS), einen Computer oder beispielsweise einen DSP handeln. Zur Steuerung können ferner Steuerleitungen zwischen dem Aktuator und der Steuereinrichtung vorgesehen sein, wobei es auch denkbar ist, dass die Ansteuerung drahtlos erfolgt.

Die Kommunikationseinrichtung kann drahtgebunden oder drahtlos ausgeführt sein. Bei der Eingabe kann es sich beispielsweise um ein drahtloses Funksignal handeln, welches Datenpakete kodiert.

In einer Ausführungsform kann die Anzeigevorrichtung eine Speichereinrichtung zum Speichern eines Soll-Öffnungswinkels aufweisen, wobei der Soll-Öffnungswinkel eine geöffnete Stellung der Anzeigevorrichtung angeben kann und der Aktuator dazu ausgebildet sein kann, das Display in die geöffnete Stellung zu verschwenken.

Es ist in der vorstehend beschriebenen Ausführungsform also möglich, dass beim Empfang der Eingabe das Display in eine vorher definierte Stellung verschwenkt wird. Beispielsweise von einer geschlossenen Stellung in eine geöffnete Stellung. Eine Stellung kann ganz allgemein als ein Öffnungswinkel gespeichert sein, wobei der Öffnungswinkel von der Basis und dem Display aufgespannt wird.

Dadurch, dass definierte Stellungen verwendet werden, kann eine Eingabe zum Beispiel als ein Signal ausgeführt sein, das keinerlei Nutzdaten überträgt. Allein die Detektion des Signals als Eingabe führt dann zu dem Verschwenken. Die Menge der zu übertragenden Daten wird daher reduziert.

Mit der beschriebenen Ausführungsform ist es z.B. auch möglich, dass im Sitz eines Motorrollers ein Drucksensor vorgesehen sein kann, der bei der Detektion eines erhöhten Drucks eine Eingabe an die Anzeigevorrichtung sendet, wodurch das Display von der geschlossenen Stellung in die geöffnete Stellung verschwenkt wird.

Erfindungsgemäß ist die Kommunikationseinrichtung zur Detektion eines NFCund/oder eines RFID-Signals ausgebildet. Dabei ist die Steuereinrichtung weiter dazu ausgebildet, das Display von einer geschlossenen Stellung in eine geöffnete Stellung zu verschwenken, wenn die Kommunikationseinrichtung das NFC- bzw. RFID-Signal detektiert.

NFC steht für Near Field Communication und ermöglicht, dass z.B. ein Smartphone zur Öffnung der Anzeigevorrichtung verwendet werden kann. Es ist beispielsweise denkbar, dass sich ein Fahrer bzw. Benutzer der Anzeigevorrichtung nähert, so dass bei der Näherung das NFC- bzw. RFID-Signal detektiert wird. Bei Unterschreiten eines Mindestabstandes, also wenn das Signal detektiert wird, kann sich die Anzeigevorrichtung automatisch öffnen. Wenn der Benutzer sich wieder von der Anzeigevorrichtung entfernt, kann sich die Anzeigevorrichtung wieder automatisch schließen.

Es wird somit möglich gemacht, dass die Anzeigevorrichtung nur sichtbar, d.h. geöffnet, ist, wenn der Benutzer sich in der Nähe befindet. Unberechtigte Personen haben dann keine Möglichkeit, den Inhalt des Displays einzusehen. Auch wird das Display gegen Beschädigungen geschützt.

In einer Ausführungsform kann die Speichereinrichtung zur Speicherung mindestens einer Benutzeridentifikationsnummer, insbesondere in einer Datentabelle, ausgebildet sein. Ferner kann ein NFC- und/oder ein RFID-Signal eine Anfrageidentifikationsnummer enthalten und die Steuereinrichtung kann dazu ausgebildet sein, den Aktuator derart anzusteuern, dass das Display von einer geschlossenen Stellung in eine geöffnete Stellung verschwenkt wird, wenn die Anfrageidentifikationsnummer in der Speichereinrichtung gespeichert ist.

Die vorstehend beschriebene Ausführungsform bietet eine sehr einfache Möglichkeit, eine Benutzerauthentifizierung auszuführen. Dabei wird das Display nur dann in eine geöffnete Stellung verschwenkt, wenn der Benutzer der Anzeigevorrichtung bekannt ist. Hierzu kann die Speichereinrichtung Benutzeridentifikationsnummern speichern. Zur Verbesserung der Datensicherheit ist es auch möglich, dass die Benutzeridentifikationsnummer als Hash-Wert vorliegt, der zusammen mit einem Benutzernamen gespeichert ist. Durch die Speicherung eines Hash-Wertes kann die Benutzeridentifikationsnummer nicht als Klartext aus der Datenbank ausgelesen werden. Eine unberechtigte Entnahme der Benutzeridentifikationsnummer aus der Datentabelle ist somit nicht möglich. Insbesondere kann die Speicherung in einer Datenbank ausgeführt sein, z.B. einer relationalen Datenbank oder einer schemalosen Datenbank. Durch das Verwenden einer Datenbanktechnologie wird eine einfache Möglichkeit bereitgestellt, die Datentabelle über das Internet zugänglich zu machen.

Anstelle von NFC oder RFID kann selbstverständlich auch eine beliebige andere Übertragungstechnologie verwendet werden, wie z.B. Bluetooth oder ein WLAN-Signal.

In einer Ausführungsform kann ein asymmetrisches Verschlüsselungsverfahren zur Verschlüsselung der Anfrageidentifikationsnummer verwendet werden.

Es ist also möglich, dass die Anfrageidentifikationsnummer verschlüsselt wird, was die Sicherheit gegen ein Abhören des Übertragungskanals bzw. Abgreifen der übertragenen Information erhöht.

In einer Ausführungsform kann die Anzeigevorrichtung ferner einen Lichtsensor zum Messen einer Lichteinstrahlung aufweisen. Ferner kann die Steuereinrichtung den Aktuator derart steuern, dass Reflektionen von einer durch das Display definierten Spiegelebene umgelenkt werden, so dass das Blenden eines Benutzers beim Verwenden der Anzeigevorrichtung verringert wird.

Als Lichtsensor kann z.B. eine Fotodiode oder eine Kamera vorgesehen sein. Damit ist es möglich, die Intensität der Lichteinstrahlung zu messen. Die Steuereinrichtung kann den Aktuator dann so steuern, dass ein Benutzer nicht geblendet wird. Dies erhöht die Verkehrssicherheit deutlich, da der Benutzer nicht durch störende Reflektionen gestört wird. Darüber hinaus wird die Lesbarkeit des Displays zu jedem Zeitpunkt sichergestellt. Insbesondere kann während der Fahrt die Stellung des Displays kontinuierlich angepasst werden, sodass eine Lesbarkeit des Displays zu jedem Zeitpunkt der Fahrt gewährleistet ist.

In einer Ausführungsform kann in der Speichereinrichtung mindestens eine Spiegelabstrahlrichtung gespeichert sein, die jeweils eine Richtung von der Spiegelebene weg angibt.

Die Steuereinrichtung kann in der aktuellen Ausführungsform weiter dazu ausgebildet sein, den Aktuator derart anzusteuern, dass das Display in eine Fahrstellung verschwenkt wird, wobei in der Fahrstellung die Richtung der Reflektionen von der Spiegeleben weg zu der mindestens einen Spiegelabstrahlrichtung verschieden ist.

Das Display wird in der vorliegenden Ausführungsform also genau so verschwenkt, dass der Fahrer nicht geblendet wird. Dieses führt zu einer besseren Lesbarkeit des Displays, einem angenehmeren Fahrgefühl und einer erhöhten Sicherheit.

Die mindestens eine Spiegelabstrahlrichtung kann beispielsweise als Vektor gespeichert sein. Als Bezugskoordinatensystem für den Vektor kann beispielsweise eine Ecke des Displays dienen. Die mindestens eine Spiegelabstrahlrichtung kann daher eine Richtung angeben, in der sich die Augen des Benutzers der Anzeigevorrichtung üblicherweise befinden. Zum Beispiel wird bei einem Motorroller der Fahrer immer während der Fahrt in einer bestimmten Position sitzen. Es ist somit möglich, bereits im Werk zu bestimmen, durch welche Reflektionen der Fahrer geblendet werden würde.

In einer Ausführungsform kann ein/der Lichtsensor dazu ausgebildet sein, eine Position einer Lichtquelle zu bestimmen, wobei die Steuereinrichtung dazu ausgebildet sein kann, eine/die Richtung der Reflektionen von einer/der durch das Display definierten Spiegelebene unter Verwendung der bestimmten Position der Lichtquelle zu berechnen.

Es kann also festgestellt werden, aus welcher Richtung die Lichtquelle auf das Display scheint. Dadurch kann kontinuierlich die Stellung des Displays in Abhängigkeit von der relativen Position der Lichtquelle zu dem Lichtsensor angepasst werden. Die Lesbarkeit des Displays wird daher weiter verbessert und das Blenden des Fahrers reduziert.

Es kann z.B. eine 2D-Position bestimmt werden. Beispielsweise kann eine RGBoder eine andere Kamera verwendet werden, deren Daten eine zweidimensionale Position angeben. Beispielsweise kann bei bekannter Anordnung des Sensors zu dem Display eine Koordinate im Koordinatensystem des Sensors in eine Koordinate des Koordinatensystems des Displays umgerechnet werden. Für die Umrechnung kann z.B. die Steuereinrichtung eingesetzt werden.

Es ist in einer weiteren Ausführungsform möglich, die Richtung der Lichtquelle auf eine andere Art und Weise zu bestimmen. Beispielsweise kann die Anzeigevorrichtung einen Photodetektor als Lichtsensor umfassen, der dazu ausgebildet ist, lediglich eine Lichtintensität zu messen. Wenn der Lichtsensor an dem Display angeordnet ist, kann durch Verschwenken des Displays eine Stellung des Displays festgestellt werde, in der eine maximale Lichtintensität gemessen wird. Die maximale Lichtintensität wird genau dann gemessen, wenn der Lichtsensor direkt auf die Lichtquelle gerichtet ist. Somit kann aus der Stellung des Displays bei der gemessenen maximalen Lichtintensität die Position der Lichtquelle relativ zum Display bestimmt werden.

In einer Ausführungsform können mindestens zwei Spiegelabstrahlrichtungen einen Blendbereich angeben, wobei in der Fahrstellung die Richtung der Reflektionen von der Spiegelebene weg außerhalb des Blendbereichs liegt.

Es kann gewünscht sein, dass ein ganzer Bereich von störenden Reflektionen freigehalten werden soll. Beispielsweise wird der Fahrer eines Motorrollers während der Fahrt seinen Kopf leicht bewegen, so dass innerhalb des Bewegungsradius des Fahrers während der Fahrt ein Blenden des Fahrers effektiv verhindert werden sollte. Die Sicherheit des Fahrers wird mit der vorstehend beschriebenen Ausführungsform nochmals erhöht. Auch die Lesbarkeit des Displays wird verbessert.

In einer Ausführungsform kann die Speichereinrichtung Bewegungsdaten speichern, die eine zeitliche Abfolge von Stellungen der Anzeigevorrichtung angeben. Die Steuereinrichtung kann dabei dazu ausgebildet sein, den Aktuator derart anzusteuern, dass das Display gemäß den Bewegungsdaten verschwenkt wird.

Es ist also möglich, dass das Display einer vordefinierten Bahn folgt. Dadurch kann das Display beispielsweise als Signalelement eingesetzt werden. Es ist denkbar, dass das Display bei Empfang der Eingabe eine "Winkbewegung" ausführt, um den Benutzer über die Einsatzfähigkeit zu informieren.

Die verschiedenen Stellungen können beispielsweise als Öffnungswinkel der Anzeigevorrichtung gespeichert sein.

Die Aufgabe wird ferner gelöst durch eine Authentifizierungsvorrichtung für einen Motorroller, umfassend eine Anzeigevorrichtung, wie sie vorstehend beschrieben wurde.

In einer Ausführungsform der Authentifizierungsvorrichtung kann die Steuereinrichtung dazu ausgebildet sein, in einer geöffneten Stellung der Anzeigevorrichtung eine Eingabeaufforderung anzuzeigen. Ferner kann die Steuereinrichtung dazu ausgebildet sein, eine, insbesondere über eine Eingabeeinrichtung, empfangene Benutzereingabe einer, insbesondere vorbestimmten, Benutzeridentifikationsnummer zuzuordnen und zu bestimmen, ob die Benutzereingabe der Benutzeridentifikationsnummer zugeordnet ist. Die Steuereinrichtung kann ferner dazu ausgebildet sein, ein Freigabesignal an den Motorroller abzugeben, wobei das Freigabesignal angibt, dass der Motorroller zur Benutzung freigegeben ist.

Es ist also möglich, mit der Authentifizierungsvorrichtung in der vorstehend beschriebenen Ausführungsform eine Zwei-Faktor-Authentifizierung durchzuführen. Zunächst kann festgestellt werden, ob eine Benutzeridentifikationsnummer bekannt ist. Darauffolgend kann der Benutzer zur Eingabe beispielsweise eines Passworts an der Authentifizierungsvorrichtung aufgefordert werden. Ist das Passwort der Benutzeridentifikationsnummer zuordenbar, so wird der Motorroller freigegeben. Die Authentifizierungsvorrichtung kann daher beispielsweise ein Zündschloss ersetzen.

Offenbart wird neben der Erfindung auch ein Verfahren zum Steuern einer Anzeigevorrichtung, Folgendes aufweisend:
- Ermitteln einer Fahrstellung eines Displays unter Berücksichtigung mindestens einer Einstrahlrichtung und/oder mindestens eines Winkels, insbesondere eines Polarwinkel der Lichtquelle;
- Ausrichtung des Displays in die Fahrstellung.

Das Verfahren kann z.B. auf vorhandene Daten zurückgreifen, um die Einstrahlrichtung zu bestimmen. So ist z.B. der Sonnenstand an einem Ort zu einer bestimmten Zeit bekannt, sodass aufwendige Messungen vermieden werden können.

Das Verfahren bietet eine sehr effiziente Möglichkeit, das Blenden eines Fahrers zu reduzieren und die Lesbarkeit des Displays zu verbessern.

In einer Ausführungsform können mindestens zwei Spiegelwinkel einen Blendbereich angeben, wobei in der Fahrstellung die Reflektionen der Spiegelebene außerhalb des Brennbereichs liegen.

In einer Ausführungsform kann das Verfahren ein Bestimmen einer Einstrahlrichtung auf das Display umfassen, wobei ebenfalls ein der Lichtquelle zugeordneter Polarwinkel bestimmt werden kann.

Es ergeben sich ähnliche oder identische Vorteile, wie sie bereits im Zusammenhang mit der Anzeigevorrichtung und der Authentifizierungsvorrichtung beschrieben wurden.

Ferner wird neben der Erfindung ein computerlesbares Speichermedium offenbart, welches Instruktionen enthält, die (mindestens) einen Prozessor dazu veranlassen, ein Verfahren, wie vorstehend beschrieben, zu implementieren, wenn die Instruktionen durch den Prozessor ausgeführt werden.

Es ergeben sich ähnliche oder identische Vorteile, wie sie bereits im Zusammenhang mit dem vorstehend beschriebenen Verfahren beschrieben sind.

Nachfolgend wird die Erfindung anhand von Ausführungsbeispielen beschrieben, welche anhand von Abbildungen näher erläutert werden.

Hierbei zeigen:
- Fig. 1: einen elektrisch angetriebenen und faltbaren Motorroller in seitlicher Ansicht mit Lenkerbaugruppe;
- Fig. 2: die Lenkerbaugruppe in einer perspektivischen Ansicht von hinten;
- Fig. 3: eine Displayvorrichtung in geöffneter Stellung;
- Fig. 4: die Displayvorrichtung der Fig. 3 in geschlossener Stellung;
- Fig. 5a: eine schematische Darstellung der Reflektionen an der Anzeigevorrichtung;
- Fig. 5b: eine schematische Ansicht der Reflektionen, nachdem eine Korrektur der Displaystellung ausgeführt wurde;
- Fig. 6: eine schematische Darstellung eines Blendbereichs;
- Fig. 7: eine schematische Darstellung der Anzeigevorrichtung;
- Fig. 8: eine schematische Darstellung einer Datenbanktabelle zur Speicherung von Identifikationsnummern;
- Fig. 9: eine schematische Darstellung einer Datenbanktabelle zur Speicherung von Passwörtern zusammen mit Identifikationsnummern;
- Fig. 10: eine Authentifizierungsvorrichtung in schematischer Darstellung;
- Fig. 11: ein Flussdiagramm eines Verfahrens zur Steuerung einer Anzeigevorrichtung;
- Fig. 12: ein Flussdiagramm eines Verfahren zur Authentifizierung eines Fahrers an einem Motorroller.

In der nachfolgenden Beschreibung werden für gleiche und gleichwirkende Teile dieselben Bezugsziffern verwendet.

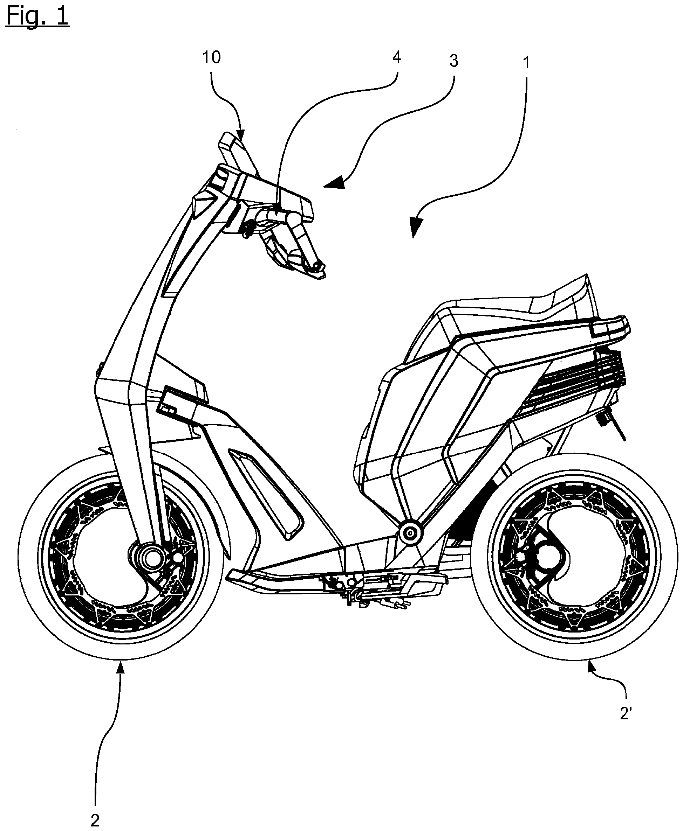

Die Fig. 1 zeigt einen elektrisch angetriebenen Motorroller 1 mit zwei Rädern 2, 2' und einer Lenkerbaugruppe 3 in einem ersten Ausführungsbeispiel. Der in Fig. 1 dargestellte Motorroller 1 ist ein faltbarer Motorroller 1. Der Motorroller 1 umfasst ferner eine (nicht dargestellte) Antriebseinheit, die in dem ersten Ausführungsbeispiel als ein Elektromotor ausgebildet ist. Zur Energieversorgung ist unter dem Sitz eine Batterie angeordnet. Die Lenkerbaugruppe 3 umfasst Handgriffe 4, über die z.B. die Geschwindigkeit des Motorrollers 1 eingestellt werden kann. Darüber hinaus umfasst die Lenkerbaugruppe 3 eine Anzeigevorrichtung 10, die in der Fig. 1 in geöffneter Stellung gezeigt ist.

Die Anzeigevorrichtung 10 wird in dem ersten Ausführungsbeispiel dazu verwendet, Geschwindigkeitsinformationen, Batteriezustandsinformationen sowie weitere Informationen, z.B. Reifendruck oder Restlaufzeit des Motorrollers 1 anzuzeigen.

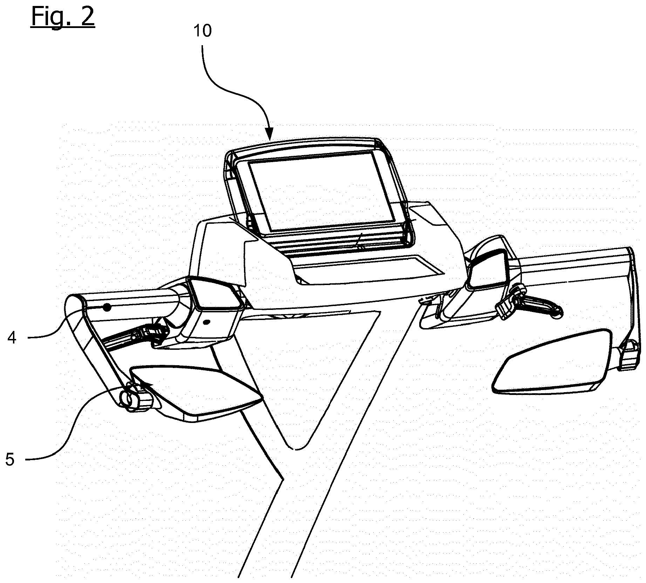

Fig. 2 zeigt eine vergrößerte Darstellung der Lenkerbaugruppe 3 der Fig. 1 in einer perspektivischen Ansicht von hinten. Die Lenkerbaugruppe 3 umfasst Spiegel 5, die unterhalb der Handgriffe 4 angeordnet sind. Die Anzeigevorrichtung 10 ist derart in die Lenkerbaugruppe 3 integriert, dass sie im geschlossenen Zustand plan mit der Lenkerbaugruppe abschließt.

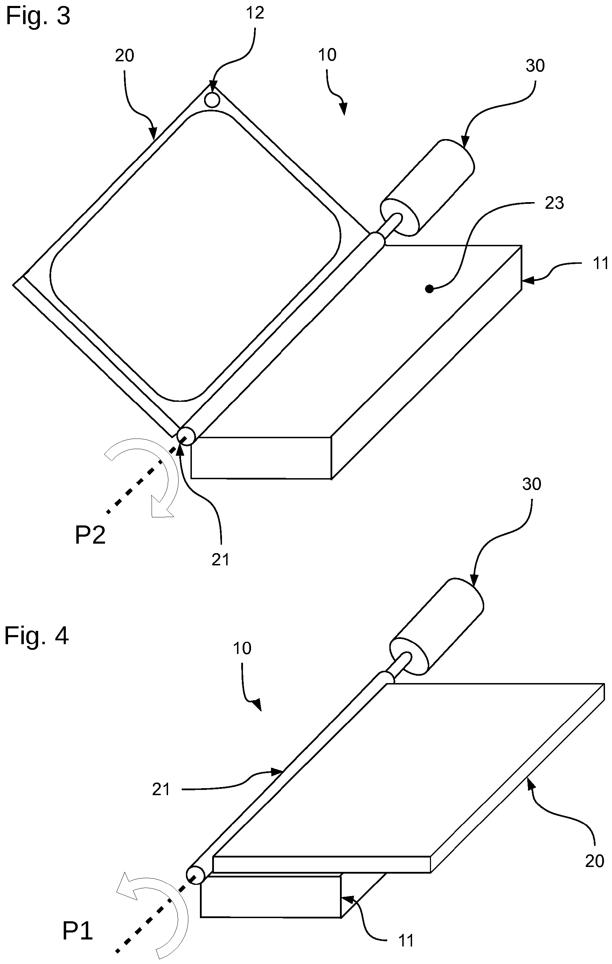

Fig. 3 zeigt eine schematische Darstellung der Anzeigevorrichtung 10. Die Anzeigevorrichtung 10 ist in der Fig. 3 in einer geöffneten Stellung P2 dargestellt. Die Anzeigevorrichtung 10 umfasst eine Basis 11 sowie ein Display 20. Das Display 20 ist über ein Displaygelenk 21 mit der Basis 11 verschwenkbar verbunden.

An dem Displaygelenk 21 ist ein Elektromotor 30 angeordnet, dessen Antriebswelle mit dem Displaygelenk in Wirkverbindung steht. Das Verschwenken des Displays 20 wird also über den Elektromotor 30 ausgeführt.

An der Anzeigevorrichtung 10 ist an dem Display 20 ein Lichtsensor 12 angeordnet. Der Lichtsensor 12 ist in der vorliegenden Ausführungsform als Kamera ausgebildet, so dass der Bereich vor dem Display 20 erfasst wird. Vorzugsweise ist der Lichtsensor 12 als Weitwinkelkamera 12 ausgebildet, so dass ein möglichst großer Bereich erfasst wird.

An der Basis 11 ist ferner eine Eingabeeinrichtung 23, wie z.B. eine Tastatur, vorgesehen. Die Eingabeeinrichtung 23 kann von einem Fahrer 7 dazu verwendet werden, Benutzereingaben vorzunehmen. Beispielsweise kann eine Benutzerauthentifikation mittels der Eingabeeinrichtung 23 ausgeführt werden. Hierzu kann der Fahrer 7 aufgefordert werden ein Passwort einzugeben, welches der Fahrer 7 über die Eingabeeinrichtung 23 eingeben kann.

Anstelle der Tastatur 23 sind auch andere Eingabemodalitäten denkbar. Beispielsweise kann ein Fingerabdrucksensor verwendet werden, einen Fahrer 7 eindeutig zu identifizieren. Auch kann ein Touchscreen auf dem Display 20 vorgesehen sein, sodass ein Fahrer 7 über ein Passwort über eine virtuelle, auf dem Display 20 angezeigte, Tastatur Eingabe ausführen kann.

Fig. 4 zeigt die Anzeigevorrichtung 10 in einer geschlossenen Stellung P1. Das Display 20 ist hierzu von der geöffneten Stellung P2 um das Displaygelenk 21 mittels des Elektromotors 30 verschwenkt worden. In der geschlossenen Stellung P1 ist das Display 20 vor äußeren Umwelteinflüssen und Vandalsimus geschützt. Hierzu kann an der Rückseite des Displays 20 eine feste Oberfläche, z.B. aus Aluminium oder einem Kunststoff vorgesehen sein. Auf der Vorderseite des Displays 20 kann eine Glasscheibe zum Schutz des Displays 20 vorgesehen sein.

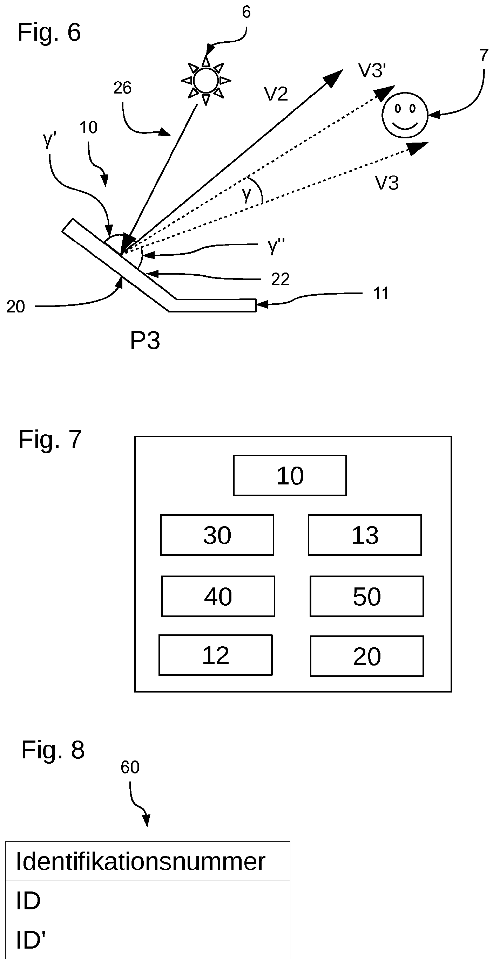

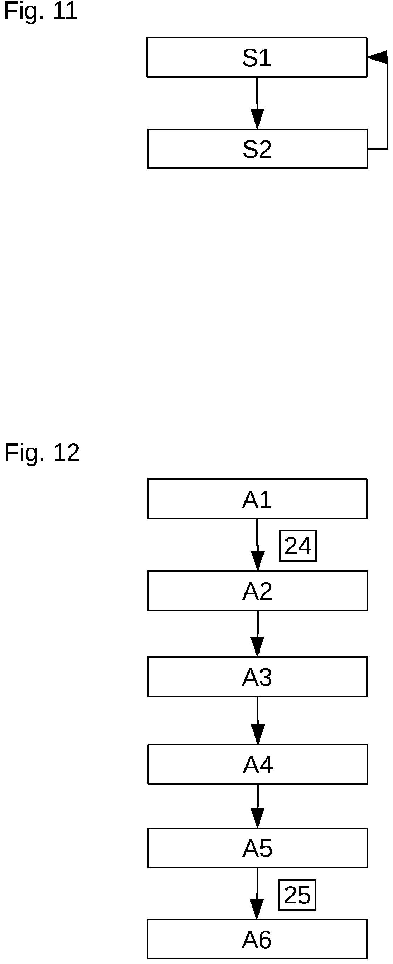

Das Verschwenken des Displays 20 von der geöffneten Stellung P2 in die geschlossene Stellung P1 oder andersherum wird in dem gezeigten Ausführungsbeispiel durch das Empfangen von Benutzereingaben 24 (siehe Fig. 12) initiiert. Beispielsweise kann eine Kommunikationseinrichtung 50 (siehe Fig. 7) vorgesehen sein, die ein NFC- oder RFID-Signal empfängt.

In einem Ausführungsbeispiel gemäß der Erfindung nähert sich ein Fahrer 7 dem Motorroller 1 mit einem Smartphone in der Tasche. Das Smartphone sendet ein NFC-Signal als Benutzereingabe 24 an die Anzeigevorrichtung 10. Sobald das NFC-Signal 24 von der Kommunikationseinrichtung 50 empfangen wird, wird der Elektromotor 30 derart angesteuert, dass sich das Display 20 von der geschlossenen Stellung P1 in die geöffnete Stellung P2 verschwenkt.

Wenn sich der Fahrer 7 wieder von dem Motorroller 1 entfernt, werden keine Signale mehr von der Kommunikationseinrichtung 50 empfangen, so dass sich das Display 20 von der geöffneten Stellung P2 in die geschlossene Stellung P1 verschwenkt.

In einem Ausführungsbeispiel wird bei Empfang der Benutzereingabe 24 das Display 20 entlang einer vordefinierten Bahn verschwenkt. Hierzu ist in einer Speichereinrichtung 13 der Anzeigeeinrichtung 10 eine Vielzahl von Öffnungswinkel gespeichert. Die Steuereinrichtung 40 steuert den Aktuator 30 nun derart, dass das Display 20 entsprechend den gespeicherten Steuerwinkeln verschwenkt wird. So wird z.B. einem Fahrer 7 signalisiert, wo sich sein Motorroller 1 befindet.

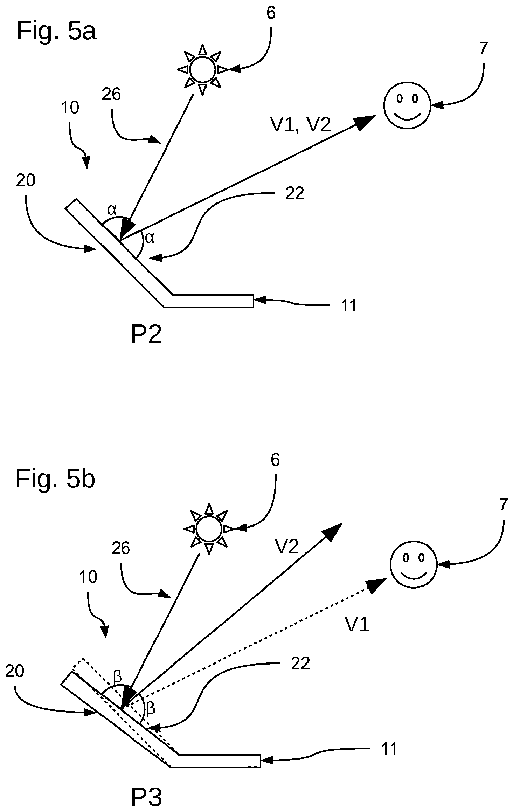

Fig. 5a zeigt eine Ausführungsform, bei der ein Fahrer 7 des Motorrollers 1 während der Fahrt vor blendenden Sonnenstrahlen 26 geschützt wird. Fig. 5a zeigt dabei eine Ausgangssituation, bei der Lichteinstrahlung 26 direkt in Richtung V1, V2 des Fahrers 7 von dem Display 20 reflektiert wird. Das Display 20 definiert also eine Spiegelebene 22, die in der Ebene der Displayoberfläche liegt. Mit dem Lichtsensor 12 kann die Richtung der Lichteinstrahlung 26 gemessen werden, z.B. in Form des Einfallswinkels a. Der Einfallswinkel α wird definiert als der Winkel zwischen der Spiegelebene des Displays 20 und den einfallenden Lichtstrahlen. In einer Speichereinrichtung 13 der Anzeigevorrichtung 10 ist eine Spiegelabstrahlrichtung V1 gespeichert, die angibt, in welcher Richtung von einer vordefinierten Displayposition aus der Fahrer 7 geblendet ist. Die Spiegelabstrahlrichtung V1 kann z.B. als Vektor oder auch als Winkel gespeichert werden. Das Display 20 muss daher so verschwenkt werden, dass die Abstrahlrichtung der Reflektion V2 nicht der Spiegelabstrahlrichtung V1 entspricht. Wenn die verschiedenen Richtungen als Vektoren gespeichert sind, dann ist es hierzu ausreichend, wenn sich die Vektoren zumindest im Wert einer Dimension unterscheiden. Vorzugsweise wird dabei ein Pufferwert einbezogen, sodass sich die Werte einer Dimension von zwei Vektoren um den Pufferwert unterscheiden. Wenn die Spiegelabstrahlrichtung V1 und die Abstrahlrichtung der Reflektion V2 jeweils als Winkel gespeichert sind, dann ist es ausreichend, wenn sich die Winkel unterscheiden, z.B. um 2, 5 oder 10 Grad.

Der Aktuator 30 wird nun derart angesteuert, wie es in Fig. 5b gezeigt ist. Fig. 5b zeigt, dass die Anzeigevorrichtung 10 sich in einer Fahrstellung P3 befindet. Dabei ist der Öffnungswinkel zwischen Display 20 und Basis 11 größer als in der in Fig. 5a gezeigten offenen Stellung P2. Durch das Vergrößern des Öffnungswinkels ist auch der neue Einfallswinkel β der Lichteinstrahlung 26 größer als der ursprüngliche Einfallswinkel a. Dadurch ändert sich auch der Ausfallwinkel und der Abstrahlwinkel der Reflektion V2 ist nicht mehr identisch mit der Spiegelabstrahlrichtung V1. Der Fahrer 7 wird daher nicht mehr geblendet.

Fig. 6 zeigt ein weiteres Ausführungsbeispiel, bei dem ein Blenden des Fahrers 7 verhindert wird. Bei dem Ausführungsbeispiel der Fig. 6 werden in der Speichereinrichtung 13 zwei Abstrahlrichtungen V3, V3' bzw. zugehörige Spiegelwinkel γ, γ' gespeichert, die einen Blendbereich angeben. Der Blendbereich γ ist im vorliegenden Ausführungsbeispiel als der Winkel γ definiert, der durch die Abstrahlrichtungen V3 und V3' eingeschlossen ist und auf der Seite des Fahrers 7 von dem Display 20 liegt.

Mit der Ausführungsform der Fig. 6 wird das Display 20 immer genau so verschwenkt, dass sich die Abstrahlrichtung der Reflektionen V2 niemals innerhalb des Blendbereichs γ befindet. Dadurch wird es möglich gemacht, dass der Fahrer 7 z.B. Kopfbewegungen ausführen kann, ohne geblendet zu werden und dass kein weiteres Verschwenken des Displays 20 ausgeführt werden muss.

In einem Ausführungsbeispiel ist ferner vorgesehen, dass das Verschwenken des Displays 20 während der Fahrt begrenzt wird. So kann vorgesehen sein, dass während der Fahrt nur ein Verschwenken um wenige Grad, z.B. 2, 5, 10 oder 25 Grad, zugelassen wird, damit der Fahrer 7 nicht durch eine ständige Bewegung des Displays 20 irritiert wird. Auch muss gewährleistet sein, dass der Fahrer 7 immer eine gute Sicht auf das Display 20 hat, das Display 20 also nicht während der Fahrt in eine geschlossene Stellung verschwenkt wird.

In einem Ausführungsbeispiel wird auch die Geschwindigkeit des Verschwenkens begrenzt, sodass die Bewegungen des Displays 20 von dem Fahrer 7 nicht als störend empfunden werden.

Die Fig. 7 zeigt eine schematische Darstellung der Anzeigevorrichtung 10. Die Anzeigevorrichtung 10 der Fig. 7 umfasst eine Speichereinrichtung 13, eine Steuereinrichtung 40 und einen Elektromotor 30. Die Steuereinrichtung 40 kommandiert den Elektromotor 30 derart, dass das ebenfalls zur Anzeigevorrichtung 10 gehörende Display 20 verschwenkt wird. Die Kommandierung wird Benutzereingaben 24 initiiert, die über eine zur Anzeigevorrichtung 10 gehörende Kommunikationseinrichtung 50 empfangen werden.

Fig. 8 zeigt eine Datentabelle 60, die Teil einer Datenbank ist. In der Datentabelle 60 sind Identifikationsnummern ID, ID' gespeichert. In einem Ausführungsbeispiel wird mit den Eingaben 51 eine Identifikationsnummer ID an die Kommunikationseinrichtung 50 übertragen. Die Steuereinrichtung 40 kann nun mit Hilfe der Datentabelle 60 prüfen, ob die empfangene Identifikationsnummer ID bekannt ist. So wird zum Beispiel das Display 20 nur von der geschlossenen Stellung P1 in die geöffnete Stellung P2 verschwenkt, wenn die Identifikationsnummer ID in der Datentabelle 60 vorliegt. Somit wird ein einfacher Authentifizierungsmechanismus bereitgestellt.

Die Datentabelle 60 ist in einem Ausführungsbeispiel auf einem Webserver gespeichert und die Kommunikationseinrichtung 50 ist dazu ausgebildet mit dem Webserver über ein Mobilfunknetz zu kommunizieren. Dadurch wird eine erhöhte Sicherheit der Daten erreicht, da die Identifikationsnummern ID, ID' nicht auf der Anzeigevorrichtung 10 lokal gespeichert werden müssen.

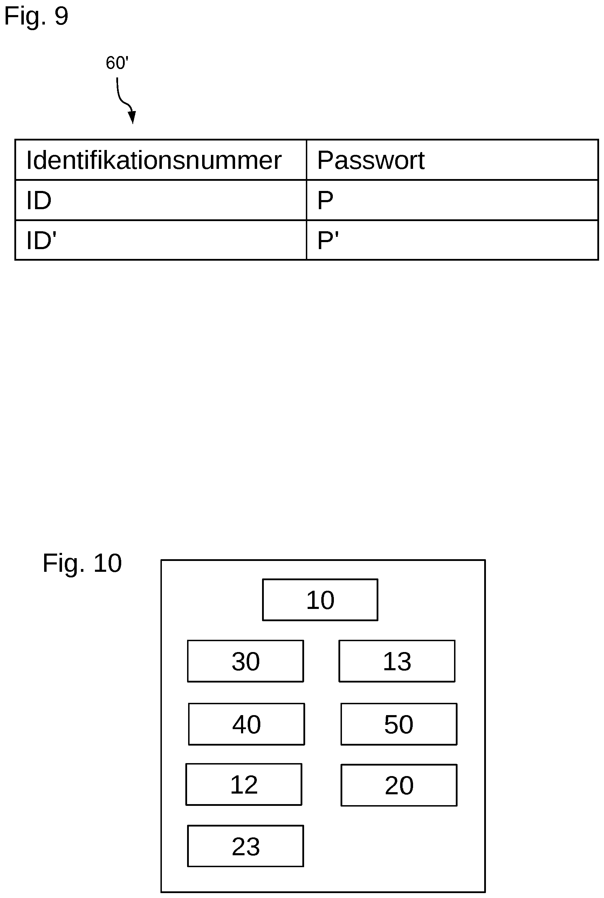

Fig. 9 zeigt ein weiteres Ausführungsbeispiel eines Authentifizierungsmechanismus. Bei dem Ausführungsbeispiel der Fig. 9 sind in einer Datentabelle 60' nicht nur Identifikationsnummer ID, ID' sondern auch zu diesen zugeordnet Passwörter P, P' gespeichert. Vorzugsweise sind die Passwörter P, P' als Hash-Wert gespeichert, der z.B. durch den MD5-Algorithmus oder Sha512Crypt berechnet ist. Das Überprüfen des Vorliegens einer Identifikationsnummer ID, ID' stellt in dem Ausführungsbeispiel der Fig. 9 eine erste Phase einer Zwei-Faktor-Authentifizierung dar. In Reaktion auf eine korrekt erkannte Identifikationsnummer ID wird das Display 20 in die geöffnete Stellung P2 verschwenkt, so dass die Tastatur 23 freigegeben wird. Der Fahrer 7 wird nun über das Display 20 aufgefordert, ein Passwort einzugeben. Das eingegebene Passwort P wird, nachdem es gehasht wurde, mit dem in der Datentabelle 60' zu der entsprechenden Identifikationsnummer ID gespeicherten Passwort P verglichen. Wird eine Übereinstimmung der Hash-Werte festgestellt, so wird der Motorroller 1 zur Fahrt freigegeben.

Fig. 10 zeigt eine Authentifizierungsvorrichtung 10, mit der die vorstehend beschriebene Zwei-Faktor-Authentifizierung ausgeführt werden kann. Zusätzlich zu der vorstehend beschriebenen Anzeigevorrichtung 10, enthält die Authentifizierungsvorrichtung 10 eine Eingabeeinrichtung 23, über die der Fahrer 7 das Passwort P, P' eingeben kann.

Die Fig. 11 zeigt ein Flussdiagramm des Verfahrens zur Steuern einer Displayvorrichtung. In einem ersten Schritt S1 wird eine Fahrstellung P3 des Displays 20 bestimmt. Dies wird unter Berücksichtigung mindestens einer Einstrhalungsrichtung V1, V2 und/oder mindestens eines Winkels (a) ausgeführt.

Im zweiten Schritt S2 wird das Display 20 in die bestimmte Fahrstellung P3 verschwenkt.

Das Verfahren kann kontinuierlich ausgeführt werden, so dass nach dem Schritt S2 wieder der Schritt S1 folgt.

Fig. 12 zeigt ein Flussdiagramm eines Verfahrens zur Authentifizierung eines Fahrers 7 mit einem Motorroller 1. Im Schritt A1 zeigt das Display 20 in der geöffneten Stellung P2 eine Eingabeaufforderung an. Zuvor ist der Fahrer 7 also bereits als ein möglicher Fahrer 7 erkannt, z.B. durch Identifikation mittels NFC, und das Display 20 ist in der geöffneten Stellung. Ferner ist bereits eine dem Fahrer 7 zugeordnete Benutzer-Identifikationsnummer ID gespeichert.

Der Fahrer 7 gibt im Schritt A2 sein Passwort ein. In Schritt A3 wird überprüft, ob das Passwort P der dem Fahrer 7 zugeordneten Benutzer-Identifikationsnummer ID zuordenbar ist. Kann eine solche Zuordnung ausgeführt werden (Schritt A4), so wird im Schritt A5 ein Freigabesignal 25 an den Motorroller 1 abgegeben, so dass der Motorroller 1 in Betrieb genommen werden kann.

### Bezugszeichenliste:

- 1: Motorroller
- 2, 2': Rad
- 3: Lenkerbaugruppe
- 4: Handgriff
- 5: Spiegel
- 6: Lichtquelle
- 7: Fahrer
- 10: Anzeigevorrichtung
- 11: Basis
- 12: Lichtsensor, Kamera, Photodetektor
- 13: Speichereinrichtung
- 20: Display
- 21: Displaygelenk
- 22: Spiegelebene
- 23: Eingabeeinrichtung
- 24: Benutzereingaben
- 25: Freigabesignal
- 26: Lichteinstrahlung
- 30: Elektromotor
- 40: Steuereinrichtung
- 50: Kommunikationseinrichtung, NFC-Lesegerät
- 51: Eingabe
- 60, 60: Datentabelle, Datenbanktabelle
- P, P': Passwort
- P1: geschlossene Stellung
- P2: offene Stellung
- P3: Fahrstellung
- α, β: Einfallswinkel
- γ, γ: Spiegelwinkel
- γ: Blendbereich
- V1: Spiegel -Abstrahlrichtung
- V2: Abstrahlrichtung von Reflektionen
- V3, V3': Abstrahlrichtungen, die einen Blendbereich angeben
- ID, ID': Identifikationsnummer
- S1-S5: Verfahrensschritte
- A1-A6: Verfahrensschritte

## Patentansprüche

1. Anzeigevorrichtung (10) mit einer Basis (11) für einen Motorroller (1), Folgendes aufweisend:
- ein Display (20), das über ein Displaygelenk (21) verschwenkbar, insbesondere drehbeweglich, an der Basis (11) gelagert ist;
- einen Aktuator (30), insbesondere einen Elektromotor (30), der in Wirkverbindung mit dem Display (20) und/oder dem Displaygelenk (21) steht und dazu ausgebildet ist, das Display (20) mittels mindestens eines Displaygelenks (21) von einer ersten Stellung (P1) in eine zweite Stellung (P2) zu verschwenken;
- eine Steuereinrichtung (40) zum Ansteuern des Aktuators (30);
- eine Kommunikationseinrichtung (50) zum, insbesondere drahtlosen, Empfangen von einer Eingabe (51);
wobei
die Steuereinrichtung (40) dazu ausgebildet ist, in Reaktion auf mindestens eine Eingabe (51) den Aktuator (30) derart anzusteuern, dass das Display (20) von der ersten Stellung (P1) in die zweite Stellung (P2) verschwenkt wird
**dadurch gekennzeichnet, dass**
die Kommunikationseinrichtung (50) zur Detektion eines NFC und/oder eines RFID Signals ausgebildet ist,
wobei die Steuereinrichtung (40) weiter dazu ausgebildet ist, das Display (20) von einer geschlossenen Stellung (P1) in eine geöffnete Stellung (P2) zu verschwenken, wenn die Kommunikationseinrichtung (50) das NFC bzw. das RFID-Signal detektiert.

2. Anzeigevorrichtung (10) nach Anspruch 1,
**dadurch gekennzeichnet, dass**
die Anzeigevorrichtung (10) eine Speichereinrichtung (13) zum Speichern eines Soll-Öffnungswinkels (α) aufweist, wobei der Soll-Öffnungswinkel (a) die geöffnete Stellung (P2) der Anzeigevorrichtung (10) angibt und der Aktuator (30) dazu ausgebildet ist, das Display (20) in die geöffnete Stellung (P2) zu verschwenken.

3. Anzeigevorrichtung (10) nach einem der vorhergehenden Ansprüche, insbesondere nach Anspruch 2,
**dadurch gekennzeichnet, dass**
- eine/die Speichereinrichtung (13) zur Speicherung mindestens einer Benutzer-Identifikationsnummer (ID), insbesondere in einer Datentabelle (60, 60'), ausgebildet ist;
- ein/das NFC und/oder ein (das) RFID Signal eine Anfrageidentifikationsnummer (ID') enthält; und
- die Steuereinrichtung (40) dazu ausgebildet ist, den Aktuator (30) derart anzusteuern, dass das Display (20) von einer/der geschlossenen Stellung (P1) in eine/die geöffnete Stellung (P2) zu verschwenken, wenn die Anfrageidentifikationsnummer (ID') in der Speichereinrichtung (13) gespeichert ist.

4. Anzeigevorrichtung (10) nach einem der vorhergehenden Ansprüche, insbesondere nach Anspruch 3,
**dadurch gekennzeichnet, dass**
ein asymmetrisches Verschlüsselungsverfahren zur Verschlüsselung einer/der Anfrageidentifikationsnummer (ID') verwendet wird.

5. Authentifizierungsvorrichtung für einen Motorroller (1), umfassend eine Anzeigevorrichtung (10) nach einem der vorhergehenden Ansprüche, insbesondere nach Anspruch 4.

6. Authentifizierungsvorrichtung nach Anspruch 5,
**dadurch gekennzeichnet, dass**,
die Steuereinrichtung (40) dazu ausgebildet ist, in einer geöffneten Stellung (P2) der Anzeigevorrichtung (10) eine Eingabeaufforderung anzuzeigen (A1),
wobei die Steuereinrichtung (40) weiter dazu ausgebildet ist:
- eine, insbesondere über eine Eingabeeinrichtung (23), empfangene Benutzereingabe (24) einer, insbesondere vorbestimmten, BenutzerIdentifikationsnummer (ID, ID') zuzuordnen (A3);
- zu bestimmen (A4), ob die Benutzereingabe (24) der BenutzerIdentifikationsnummer (ID, ID') zugeordnet ist;
- ein Freigabesignal (25) an den Motorroller (1) abzugeben (A5), wobei das Freigabesignal (25) angibt, dass der Motorroller (1) zur Benutzung freigegeben ist.

## Claims

1. A display device (10) having a base (11) for a motor scooter (1), comprising the following:
- a display (20), which is mounted via a display hinge (21) to be pivotable, in particular rotational, to the base (11);
- an actuator (30), in particular an electric motor (30), which is in operative connection with the display (20) and/or the display hinge (21), and is formed to pivot the display (20) by means of at least one display hinge (21) from a first position (P1) into a second position (P2);
- a control apparatus (40) for controlling the actuator (30);
- a communication apparatus (50) for, in particular wirelessly, receiving an input (51);
wherein
the control apparatus (40) is configured to control the actuator (30) responding to at least one input (51) in such a manner that the display (20) is pivoted from the first position (P1) into the second position (P2),
**characterized in that**
the communication apparatus (50) is configured for detecting an NFC and/or RFID signal,
wherein the control apparatus (40) is further configured to pivot the display (20) from a closed position (P1) into an opened position (P2), when the communications apparatus (50) detects the NFC or RFID signal.

2. The display device (10) according to claim 1,
**characterized in that**
the display device (10) has a storage apparatus (13) for storing a target opening angle (α), wherein the target opening angle (α) indicates the opened position (P2) of the display device (10), and the actuator (30) is configured to pivot the display (20) into the opened position (P2).

3. The display device (10) according to any one of the preceding claims,
in particular according to claim 2,
**characterized in that**
- a/the storage apparatus (13) is configured to store at least one user identification number (ID) in particular in a data table (60, 60');
- an/the NFC and/or an (the) RFID signal contains a request identification number (ID'); and
- the control apparatus (40) is configured to control the actuator (30) in such a way as to pivot the display (20) from a/the closed position (P1) into an/the opened position (P2), when the request identification number (ID') is stored in the storage apparatus (13).

4. The display device (10) according to any one of the preceding claims,
in particular according to claim 3,
**characterized in that**
an asymmetric encryption method is uses for encrypting a/the request identification number (ID').

5. An authentication device for a motor scooter (1), comprising a display device (10) according to any one of the preceding claims, in particular according to claim 4.

6. The authentication device according to claim 5,
**characterized in that**
the control apparatus (40) is configured to display (A1) an input request in an opened position (P2) of the display device (10),
wherein the control apparatus (40) is further configured:
- to assign (A3) a user input (24) received in particular via an input apparatus (23) to an, in particular predetermined, user identification number (ID, ID');
- to determine (A4) whether the user input (24) is assigned to the user identification number (ID, ID');
- to emit (A5) a release signal (25) to the motor scooter (1), wherein the release signal (25) indicates that the motor scooter (1) is released for utilization.

## Revendications

1. Dispositif d'affichage (10) comprenant une base (11) pour un scooter (1), présentant ce qui suit :
- un affichage (20) qui est logé au niveau de la base (11) de manière pivotable, en particulier mobile en rotation, via une articulation d'affichage (21) ;
- un actionneur (30), en particulier un moteur électrique (30), qui se trouve en liaison fonctionnelle avec l'affichage (20) et/ou l'articulation d'affichage (21) et est constitué pour faire pivoter l'affichage (20) d'une première position (P1) à une deuxième position (P2) moyennant au moins une articulation d'affichage (21) ;
- un dispositif de commande (40) destiné à piloter l'actionneur (30) ;
- un dispositif de communication (50) destiné à recevoir, en particulier sans fil, une saisie (51) ;
sachant que le dispositif de commande (40) est constitué pour piloter l'actionneur (30) en réaction à au moins une saisie (51) de manière à faire pivoter l'affichage (20) de la première position (P1) à la deuxième position (P2),
**caractérisé en ce que**
le dispositif de communication (50) est constitué pour détecter un signal NFC et/ou RFID,
sachant que le dispositif de commande (40) est en outre constitué pour faire pivoter l'affichage (20) d'une position fermée (P1) à une position ouverte (P2) lorsque le dispositif de communication (50) détecte le signal NFC ou RFID.

2. Dispositif d'affichage (10) selon la revendication 1,
**caractérisé en ce que**
le dispositif d'affichage (10) présente un dispositif de mémorisation (13) destiné à mémoriser un angle d'ouverture de consigne (a), sachant que l'angle d'ouverture de consigne (a) indique la position ouverte (P2) du dispositif d'affichage (10) et l'actionneur (30) est constitué pour faire pivoter l'affichage (20) à la position ouverte (P2).

3. Dispositif d'affichage (10) selon l'une des revendications précédentes, en particulier selon la revendication 2,
**caractérisé en ce que**
- un/le dispositif de mémorisation (13) est constitué pour mémoriser au moins un numéro d'identification d'utilisateur (ID), en particulier dans un tableau de données (60, 60') ;
- un/le signal NFC et/ou un (le) signal RFID contient un numéro d'identification de demande (ID') ; et
- le dispositif de commande (40) est constitué pour piloter l'actionneur (30) de manière à faire pivoter l'affichage (20) d'une/de la position fermée (P1) à une/la position ouverte (P2) lorsque le numéro d'identification de demande (ID') est mémorisé dans le dispositif de mémorisation (13).

4. Dispositif d'affichage (10) selon l'une des revendications précédentes, en particulier selon la revendication 3,
**caractérisé en ce que**
un procédé de cryptage asymétrique destiné à crypter un/le numéro d'identification de demande (ID') est utilisé.

5. Dispositif d'authentification pour un scooter (1), comprenant un dispositif d'affichage (10) selon l'une des revendications précédentes, en particulier selon la revendication 4.

6. Dispositif d'authentification selon la revendication 5,
**caractérisé en ce que**
le dispositif de commande (40) est constitué pour indiquer (A1) une invite de saisie dans une position ouverte (P2) du dispositif d'affichage (10),
sachant que le dispositif de commande (40) est en outre constitué pour :
- assigner (A3) une saisie d'utilisateur (24) reçue, en particulier via un dispositif de saisie (23), à un numéro d'identification d'utilisateur (ID, ID'), en particulier prédéterminé ;
- déterminer (A4) si la saisie d'utilisateur (24) est assignée au numéro d'identification d'utilisateur (ID, ID') ;
- délivrer (A5) un signal de libération (25) au scooter (1), sachant que le signal de libération (25) indique que le scooter (1) est libéré pour l'utilisation.
